(19) Europäisches Patentamt
European Patent Office
Office européen des brevets

(11) Veröffentlichungsnummer: **0 083 309**
**A1**

# (12) EUROPÄISCHE PATENTANMELDUNG

(21) Anmeldenummer: 82810559.3

(22) Anmeldetag: 20.12.82

(51) Int. Cl.$^3$: C 09 B 69/06
C 09 B 19/02, D 06 F 1/06

(30) Priorität: 24.12.81 CH 8283/81

(43) Veröffentlichungstag der Anmeldung: 06.07.83 Patentblatt 83/27

(84) Benannte Vertragsstaaten: CH DE FR GB IT LI

(71) Anmelder: CIBA-GEIGY AG
Patentabteilung Postfach
CH-4002 Basel(CH)

(72) Erfinder: Adam, Jean-Marie, Dr.
Rue de Village Neuf 60 D
F-68300 Rosenau(FR)

## (54) Farbsalze basischer Dioxazinfarbstoffe.

(57) Farbsalze der Formel

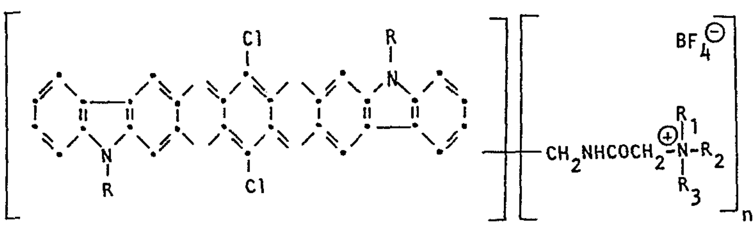

worin R $C_1$-$C_4$-Alkyl, $R_1$, $R_2$ Alkyl, $R_3$ Alkyl, Hydroxyalkyl, Cycloalkyl oder Aralkyl bedeuten, oder worin $R_1$, $R_2$ und $R_3$ zusammen mit dem dazwischen liegenden N-Atom einen heterocyclischen Ring bilden und n die Zahl 1-4 vorzugsweise 3-4 bedeutet, eignen sich hervorragend zur Färbung von Polyacrylnitril aus der Spinnlösung.

Man erhält Fäden in einem kräftigen brillanten Blau, welche sich zusätzlich durch einen hohen Glanz auszeichnen. Die Echtheiten, insbesondere die Lichtechtheit, Reibechtheit, Thermofixierechtheit, Washchechtheit und Dämpfechtheit sind ausserordentlich hoch.

Die Fäll- und Verstreckbäder werden nur äusserst gering fügig angefärbt.

EP 0 083 309 A1

CIBA-GEIGY AG
Basel (Schweiz)

3-13735/+

## Farbsalze basischer Dioxazinfarbstoffe

Die Erfindung betrifft Farbsalze der Formel

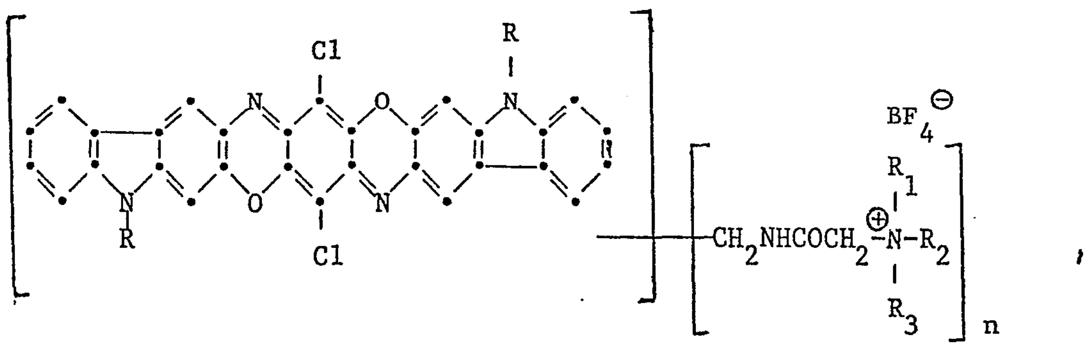

worin R $C_1$-$C_4$-Alkyl, $R_1$, $R_2$ Alkyl, $R_3$ Alkyl, Hydroxyalkyl, Cycloalkyl oder Aralkyl bedeuten, oder worin $R_1$, $R_2$ und $R_3$ zusammen mit dem dazwischen liegenden N-Atom einen heterocyclischen Ring bilden und n die Zahl 1-4 vorzugsweise 3-4 bedeutet

R bedeutet beispielsweise Methyl, Propyl, Isopropyl, Butyl oder Isobutyl, vorzugsweise aber Aethyl.

$R_1$, $R_2$ und $R_3$ stellen beispielsweise Methyl- oder Aethylgruppen dar oder $R_1$, $R_2$ und $R_3$ bilden zusammen mit dem dazwischen liegenden N-Atom einen gegebenenfalls durch Methyl- und/oder Aethylgruppen substituierter Pyridinring.

Die neuen Farbsalze erhält man zweckmässig durch Umsetzen der wässrigen Lösung eines Farbsalzes der Formel

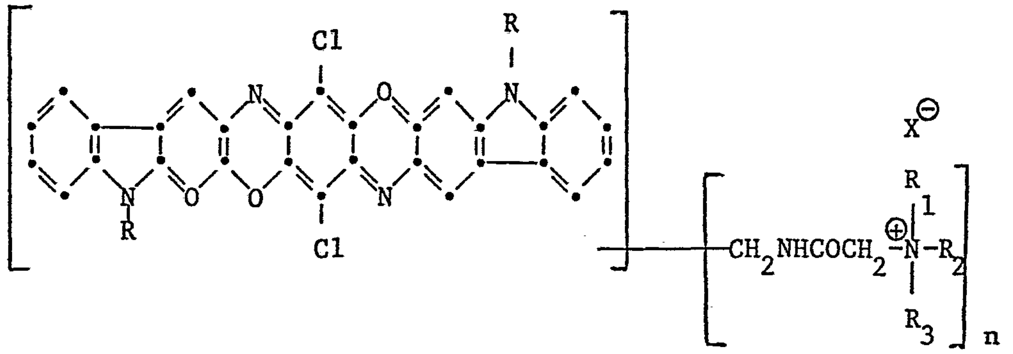

,

worin $X^{\ominus}$ ein wasserlöslichmachendes Anion bedeutet, R, $R_1$, $R_2$, $R_3$ und n die angegebene Bedeutung haben, mit Natriumtetrafluorborat.

Die Ausgangssalze sowie deren Herstellung sind in der EP-A 808110025.9 beschrieben.

Die neuen Farbsalze eignen sich hervorragend zum Färben von Polyacrylnitril in der Spinnmasse in reinen blauen Tönen.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 40 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein ökonomisches Färben erlaubt.

Ausser den Polymeren des Acrylnitrils kommen als zu verspinnendes Substrat Mischpolymerisate des Acrylnitrils mit anderen Vinyl-Verbindungen, wie beispielsweise mit Vinylchlorid, Vinylfluorid, Vinylidenchlorid, Vinylacetat oder -propionat, Vinylpyridin, Vinylimidazol, Vinylpyrrolidon, Vinylalkohol, Acryl- oder Methacrylsäureestern oder Acrylamiden in Betracht, wobei diese Mischpolymerisate mindestens 70 Gew.-% an Acrylnitril aufweisen müssen und weiterhin saure Gruppen enthalten, die als Endgruppen in das Polymere mittels eines Katalysators eingeführt oder mittels solche saure Gruppen enthaltenden Comonomeren einpolymerisiert oder aufgepfropft wurden.

Nach dem erfindungsgemässen Verfahren erhält man völlig transparente, stippenfreie Spinnlösungen, die keine Verstopfung oder mechanische Abnutzung der Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss verwendeten Farbstoff gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermosfixierechtheit, Dämpf- und Wasch- und Lichtechtheit der so gefärbten Fasern hervorzuheben.

Da sich die erfindungsgemäss verwendeten Tetrafluorborat-Farbstoffsalze aus den wässrigen Lösungen, wie sie bei der Farbstoffsynthese entstehen, sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüssigkeit verwendeten aprotischen Lösungsmitteln vor dem Verspinnen nicht erst abgetrennt werden müssen, so dass insbesondere zusätzliche verfahrenstechnische Massnahmen vermieden werden. Die überraschend geringe Wasserlöslichkeit der erfindungsgemässen Farbsalze ist ein weiterer Vorteil im Hinblick auf das Ausbluten des Farbsalzes im wässrigen Fällbad.

Beispiel 1: In 500 Teile 90 %ige Schwefelsäure wird ein Gemisch von 59 Teile des durch Ringschluss von 3,6-Dichlor-2,5-bis(9-äthylcarbazolyl-3-amino)-1,4-benzochinons erhaltenen Dioxazins und 50 Teile N-Methylolchloracetamid bei 0-5° eingetragen. Es wird während 15 Stunden bei 0-5° gerührt, dann das Reaktionsgemisch auf Eis ausgegossen. Der Niederschlag wird abgesaugt, mit Wasser neutral gewaschen und getrocknet. Man erhält 100 Teile des Tetra-(chloracetylimidomethyl)-dioxazins.

50 Teile dieser Verbindung werden in 250 Teile Pyridin eingetragen und 1 Stunde auf 100° erwärmt. Das ausgefallene Farbsalz der Formel

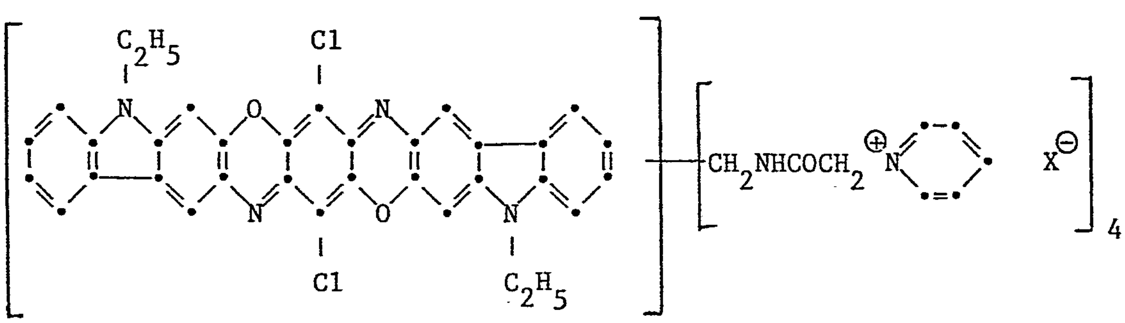

I

X = Cl
wird abgesaugt und getrocknet.

500 Teile einer wässrigen Lösung enthaltend 13 Teile des gemäss Absatz 2 erhaltenen Farbsalzes werden mit 6,6 Teilen $NaBF_4$ versetzt. Das Farbstoffsalz der Formel I ($X = BF_4$) fällt

aus, wird abfiltriert, mit Wasser salzfrei gewaschen und getrocknet. Man erhält 15 Teile eines blauen Pulvers, welches sich zu 20 Gew.% in Dimethylformamid löst.

Beispiel 2: Zu einem Farbsalz mit ähnlichen Eigenschaften gelangt man, wenn in Beispiel 1, Absatz 2 anstelle von Pyridin Trimethylamin verwendet und dieses, wie in Beispiel 1, Absatz 3 angegeben, mit $NaBF_4$ umgesetzt wird.

Beispiel 3: Zu 100 Teilen einer 30 %igen Lösung eines sauermodifizierten Polyacrylnitrils in Dimethylformamid werden 5 Teile einer 5 %igen Lösung des gemäss Beispiel 1 erhaltenen Bortetrafluorid-Farbsalzes in Dimethylformamid gegeben. Die zu verspinnende Lösung wird homogenisiert und nach einem in der Technik üblichen und bekannten Trockenspinnverfahren versponnen.

Man erhält Fäden in einem kräftigen brillanten Blau, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind ausserordentlich hoch.

Führt man die Faserherstellung nach einem in der Technik üblichen Nass-Spinnverfahren durch, erhält man blau gefärbte Fäden von gleich guten Eigenschaften. Die Fäll- und Verstreckbäder werden nur äusserst geringfügig angefärbt.

Patentansprüche

1. Farbsalze der Formel

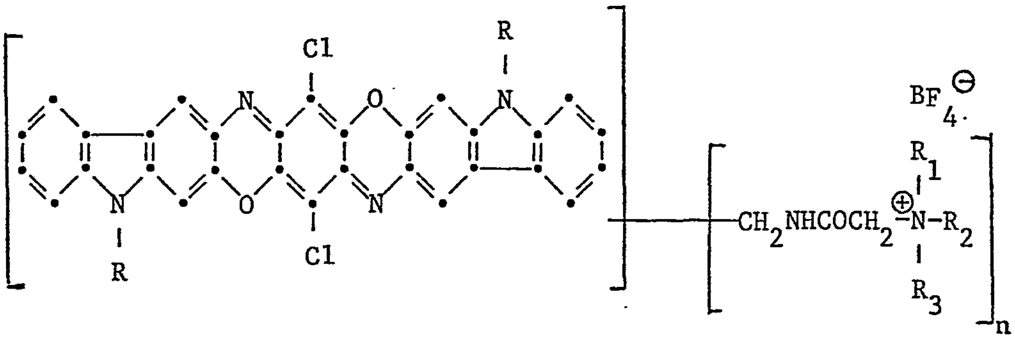 ,

worin R $C_1$-$C_4$-Alkyl, $R_1$, $R_2$ Alkyl, $R_3$ Alkyl, Hydroxyalkyl, Cycloalkyl oder Aralkyl bedeuten, oder worin $R_1$, $R_2$ und $R_3$ zusammen mit dem dazwischen liegenden N-Atom einen heterocyclischen Ring bilden und n die Zahl 1-4 bedeutet.

2. Farbsalze gemäss Anspruch 1, worin R Aethyl bedeutet.

3. Farbsalze gemäss Ansprüchen 1 und 2, worin 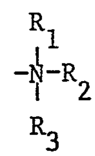 einen gegebenenfalls durch Methyl- und/oder Aethylgruppen substituierten Pyridinring bedeutet.

4. Verfahren zur Herstellung von Farbsalzen gemäss Anspruch 1, dadurch gekennzeichnet, dass man ein Farbsalz der Formel

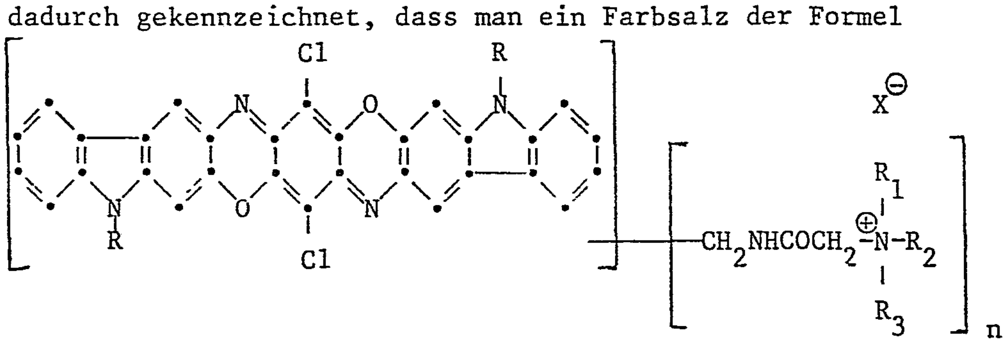 ,

worin $X^{\ominus}$ ein wasserlöslichmachendes Anion bedeutet in wässriger Lösung mit Natriumtetrafluorborat umsetzt.

5. Verfahren zum Spinnfärben von Polymeren des Acrylnitrils oder Mischpolymeren mit überwiegendem Acrylnitrilanteil, dadurch gekennzeichnet, dass man der Spinnlösung ein Farbsalz gemäss Anspruch 1 zusetzt.

6. Spinngefärbte Fasern von Polymeren des Acrylnitrils oder Mischpolymeren mit überwiegendem Acrylnitrilanteil, enthaltend ein Farbsalz gemäss Anspruch 1.

0083309

Europäisches Patentamt

# EUROPÄISCHER RECHERCHENBERICHT

Nummer der Anmeldung

EP 82 81 0559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | EP-A-0 014 678 (CIBA-GEIGY) * Beispiele 2-10 * | 1-3 | C 09 B 69/06<br>C 09 B 19/02<br>D 06 F 1/06 |
| Y | GB-A- 850 159 (BAYER) * Seite 1, Zeile 19; Seite 5 erste Formel * | 1-3 | |
| A | FR-A-1 212 939 (BAYER) * Seite 1, linke Spalte, ganz; rechte Spalte Zeile 25 * | 1,4-6 | |
| | | | RECHERCHIERTE SACHGEBIETE (Int. Cl. 3) |
| | | | C 09 B<br>C 08 L<br>D 06 F |

Der vorliegende Recherchenbericht wurde für alle Patentansprüche erstellt

| Recherchenort | Abschlußdatum der Recherche | Prüfer |
|---|---|---|
| DEN HAAG | 01-03-1983 | DAUKSCH H.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82